Europäisches Patentamt

European Patent Office

Office européen des brevets

(19)

Publication number: **0 293 542**
**A1**

## EUROPEAN PATENT APPLICATION

(21) Application number: **87850184.0**

(22) Date of filing: **05.06.87**

(51) Int. Cl.⁴ **G09B 29/00**

(43) Date of publication of application:
**07.12.88 Bulletin 88/49**

(84) Designated Contracting States:
**AT BE CH DE ES FR GB GR IT LI LU NL SE**

(71) Applicant: **Round Office AB**
**Humlegärdsgatan 14**
**S-114 46 Stockholm(SE)**

(72) Inventor: **Liljeqvist, Lars**
**Fjällvägen 12A**
**S-133 00 Saltsjöbaden(SE)**

(74) Representative: **Kransell, Rolf Arne Steinert et al**
**Kransell & Wennborg AB Sandhamnsgatan 42**
**S-115 28 Stockholm(SE)**

(54) **A device for facilitating the dimensioning of work tables and the location of related equipment.**

(57) The present invention has for its subject a device facilitating the dimensioning of work tables, especially desks, and the choice of suitable location of related equipment. It makes it possible quickly and conveniently to illustrate different layout alternatives. The device comprises a number of members, carrying symbols (10, 16, 12, 20, 26), each representing one of the implements and at least one (9) of them representing the table top (10), said members being relatively each other rotatable around a common pivot (2), the position of which corresponds to the position of a chair for the person working at the table, the symbols being all in the same reduction scale and located at selected distances from the pivot (2).

Fig. 1

## A device for facilitating the dimensioning of work tables and the location of related equipment.

The present invention concerns a device for facilitating the dimensioning of work tables and the location of related equipment. More particularly, the subject of the invention can be used to demonstrate and/or to determine space requirement and alternative locations of working equipment, such as apparatus and furniture, to be placed on the top of or near a work table, especially a desk. The invention is especially useful in connection with tables which can be made up of a number of standardized sections, or modules, and which have a table-top exhibiting at least one curved side, generally the side nearest the person who is to work at the table sitting on a chair behind it.

The creation of work tables, particularly desks, of the type having a table-top with at least one, and often two, curved sides has involved a very substantial progress in respect of the possibilities to increase the efficient working area that can be utilized by a person working at the table, generally sitting on a chair behind a concave side of the table. It should already here be emphasized that the term "working area" as used in this context does not only refer to the total area within the direct reach of the person but also to the other parts of the table-top which he cannot, at least not comfortably, reach in his sitting position but which can be used to support various types of auxiliary equipment. The extremely rapid development of computers and other electronic apparatus which has taken place during recent years has as one of its results made it usual for many groups of staff working at a desk as compulsory working aids to use viewing screen terminals, personal computers and the like. Added to this requirement is the remaining need of traditional equipment such as binders to be placed on the desk-top. The optimum way of satisfying such large space requirements is to use a table-top shaped like a portion of a ring. Using such a table configuration one can provide the large working area in the one or both of the following ways.

The one possibility is to make the annular table-top extend along a great circular sector. While, theoretically, it is possible to use a completely closed ring practical requirements as a rule limit the maximum sector angle to about 270°, namely to make it possible for the person working at the table comfortably to move to and from his chair.

The second possibility is to increase the radial dimension of the table-top. This expedient is based on the fact that many units of the equipment mentioned do not need to be placed within direct reach but may perform their functions as long as they can be observed (read) by the person at the desk.

It follows from what has been said above that, when the presence of a need for certain equipment has been established, there exist a very large number of alternative possibilities to locate the different units of that equipment. However, these alternatives are not mutually equivalent. Instead, an optimized location requires that several different factors are taken into consideration, especially factors relating to ergonomy, comfort readability, use frequency and also purely aesthetical view points. Consequently, there exists a need of a device making it possible to demonstrate and/or to determine such location alternatives as well as the space requirement of each individual unit of the equipment.

The object of the invention is to satisfy the above requirements by providing a device which is cheap to manufacture, simple to use and capable of quickly to illustrate the relevant parameters. Basically, the device shall be usable in both of two different situations. The first one is when the parameters given relate to the dimensions of the table-top, to one or both of the measures sector angle and radial width. In that case the problem, different solutions of which are to be studied, concerns choice between different types of auxiliary equipment or between alternative locations for such equipment. In the second case the starting-point is an established need of a certain equipment and the problem to be studied does then relate to the required table-top area and, again, to alternative potential locations of the different units of the equipment.

According to the main features of the invention the novel device comprises a number of members, suitably in the form of transparent sheets, which have symbols representing various parts of the working equipment. At least one such symbol illustrates the table-top and the others represent units to be placed on said top or on the floor near the table. The members are rotatable around a common pivot the position of which corresponds to the working position of the person using the table. The symbols may be at mutually different, constant radial distances from the pivot or may be arranged in a way permitting variation of that distance.

Further features of the invention are set out in the appended claims and one embodiment of the invention will now be described with reference to the drawing.

Figure 1 is an exploded perspective view illustrating a device according to the general principle corresponding to the inventive idea.

Figure 2 illustrates various components which may form part of the device.

Figure 2a shows such a component illustrating a table-top.

Figure 2b shows a component having markings illustrating a viewing screen terminal with a key board in front of it.

Figure 2c shows a component having markings which, in contrast to the preceding views, illustrate the vertical dimensions of an equipment unit, the screen terminal shown in Figure 2b.

Figure 2d does diagrammatically illustrate a shelf for storing binders and the like.

In Figure 2e there is shown a sheet having markings for the purpose of indicating relative directions from said shaft.

Figure 3 is a horizontal view showing a number of transparent sheets each provided with markings corresponding to one equipment unit and mounted for individual rotation around the shaft.

Figure 4 shows a component of the device making it possible to illustrate the various ranges in a radial direction which are within reach of the person working at the table.

Figure 5 does also illustrate reach ranges but here in a circumferential direction. The figure does also illustrate horizontal and vertical lines facilitating estimation of the areas and the boundary lines of the corresponding reach ranges.

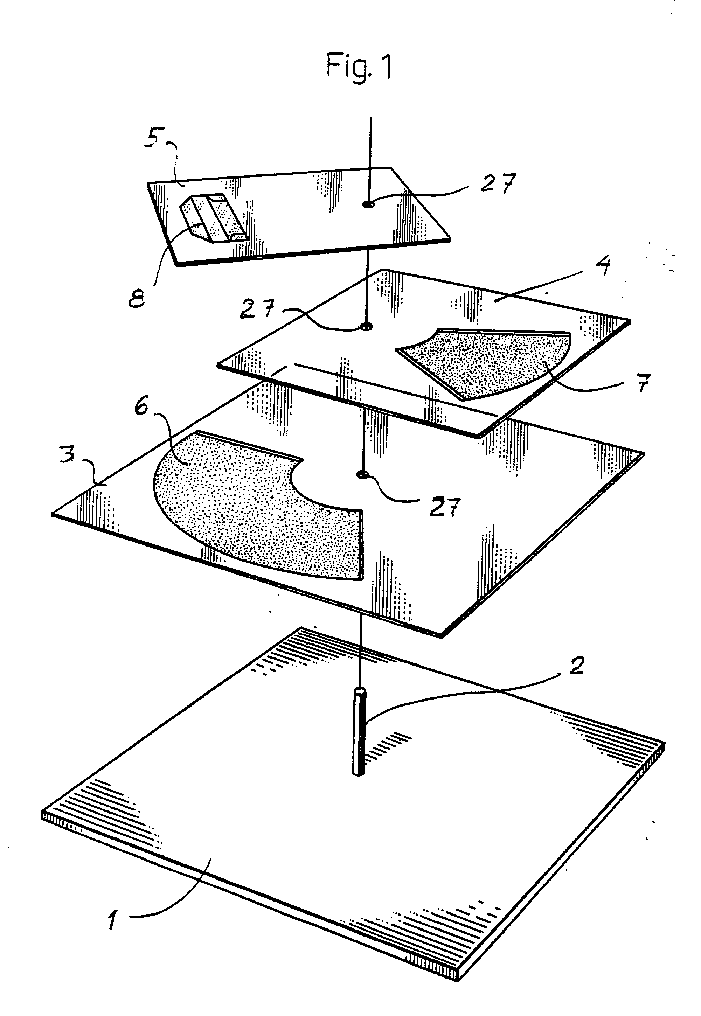

As mentioned, Figure 1 illustrates the general structure and operation of a device according to the invention. Numeral 1 designates a foot plate having a central shaft pin or pivot 2. Plate 1 supports a number of transparent sheets - for the sake of surveyability three such sheets, 3, 4 and 5, only have been shown - provided with central holes 27 adapted to receive pivot 2. It is to be understood that, in a device ready for use, sheets 3, 4 and 5 rest on top of each other and sheet 3 is in contact with foot plate 1. Each of the three sheets has markings corresponding to the contour lines of different units forming part of a complete working system consisting of a table and of related work implements located on or at the table. The dotted area 6 on sheet 3 marks the top surface of a section of the table and the dotted area 7 on sheet 4 does correspondingly mark a similar but smaller section. Numeral 8 on sheet 5 is a symbol marking the contour lines of e.g. a typewriter or a telex machine.

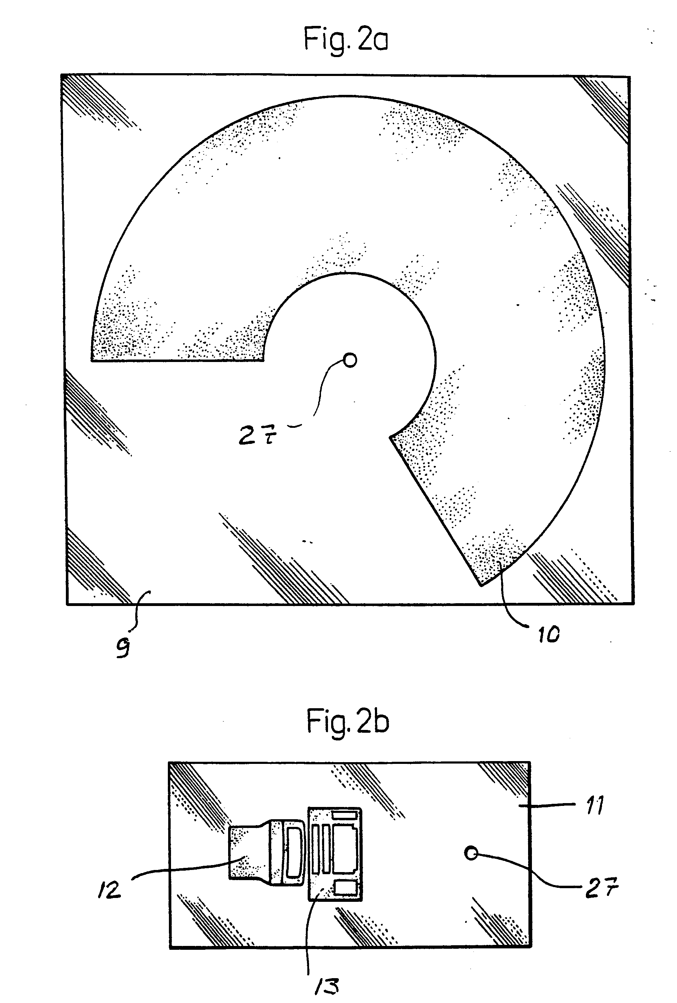

In Figure 2a there has been shown another transparent sheet 9 with a symbol illustrating the contour lines of a table-top section 10 having a greater angular sector than each of sections 6 and 7 in Figure 1.

Figure 2b shows a transparent sheet 11 with markings relating to a viewing screen terminal 12 and a key board 13 in front thereof.

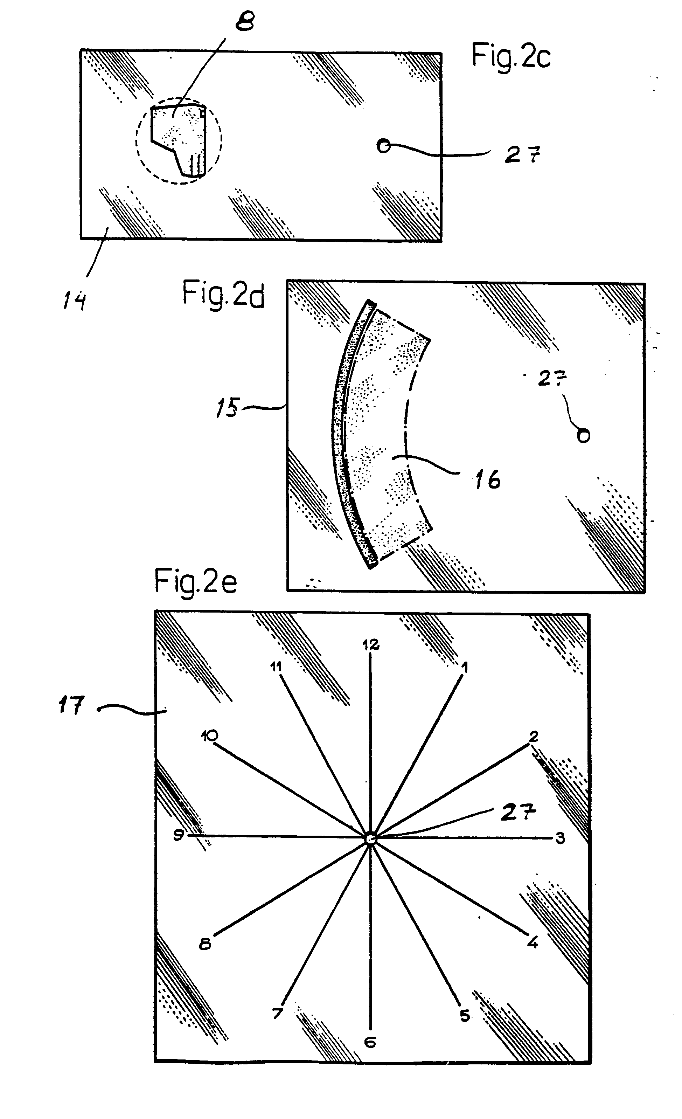

The symbol within the dashed line in Figure 2c shows apparatus 8 in an end view. Hereby the user of the device can, simultaneously, obtain information both about the space requirement of apparatus 8 in a horizontal plane and about its vertical dimensions. The latter information may be necessary in order to determine to what extent the apparatus may impede observation of other equipment units behind it.

Figure 2d shows a transparent sheet 15 with markings relating to a storing shelf 16 for binders or the like.

Transparent sheet 17 in Figure 2e has radial lines extending from the centre hole. The number of such lines may be chosen arbitrarily but, according to the embodiment illustrated, twelve radial lines have been shown. By means of such a sheet the location of an equipment unit may be described with reference to a certain radial line and to a certain distance along that line from the centre hole of the sheet.

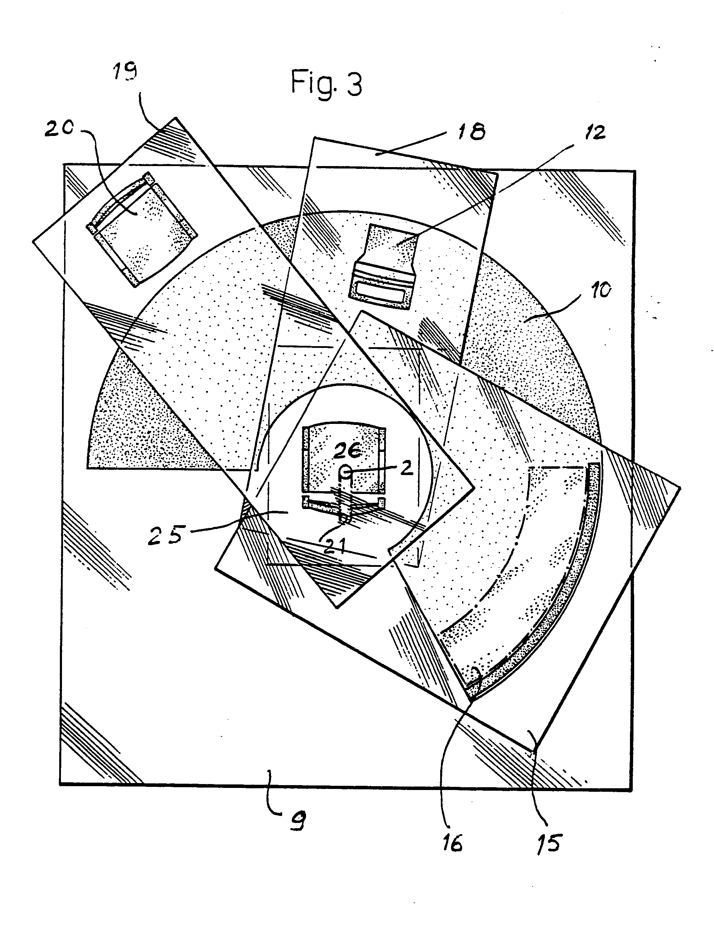

The horizontal view in Figure 3 exemplifies use of a device according to the embodiment in Figure 1. However, the various sheets shown are not the same as in Figure 1. The mutual vertical positions of the various sheets may generally be arbitrary. The sequence in which the sheets are arranged will now be described is accordingly not intended to refer to any special such relationship. On the other hand, it is generally practical to dispose the one or those sheets relating to the table-top at the bottom of the sheet stack. In Figure 3 such a sheet 9 has a marking 10 representing the available area of the table-top which, in this case, has the form of an angular sector, the sector angle being about 250°.

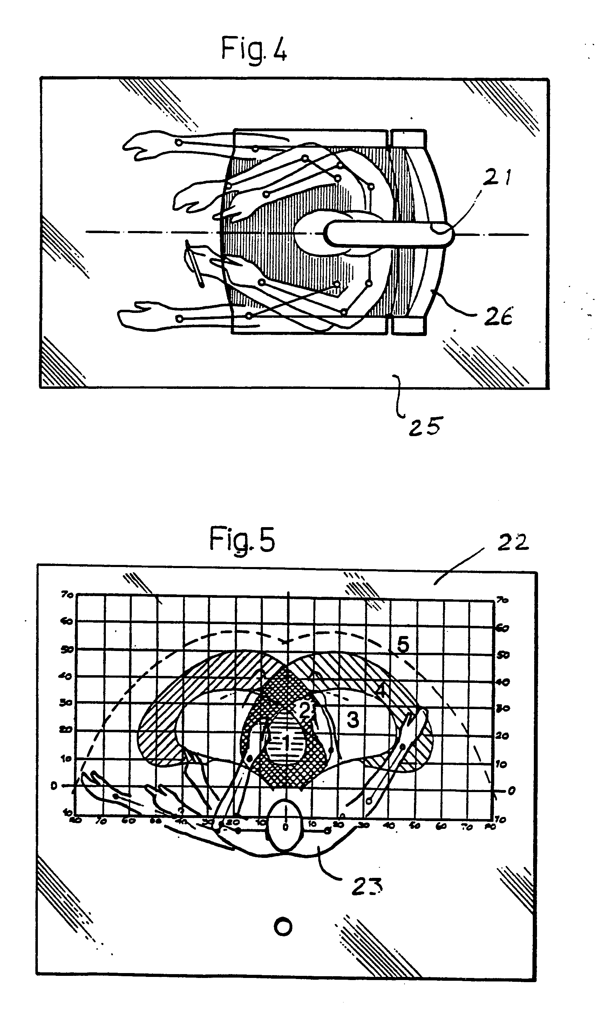

A sheet 25 - cf. Figure 4 - carries a working chair symbol 26 and has an elongate aperture 21 penetrated by pivot 2.

A sheet 15 with a binder shelf symbol 16 as shown in Figure 2d does also form part of the Figure 3 device.

A sheet 18 with a symbol 12 representing a viewing screen terminal is also mounted for rotation around pivot 2. A sheet 25 with a chair 26 is shown at the centre.

Finally, there is a sheet 19 with a symbol 20 representing a visitor's chair.

Coming back to Figure 4, it should be mentioned that it is drawn on a larger scale than Figure 3 and does also show a person sitting in chair 26 with his arms in different positions corresponding to different ranges of reach. That aspect will be discussed further below.

Chairs 20 and 26 are, of course, system units to be placed on the floor. The system may comprise further such units, e.g. storing shelves behind chair 26.

The operation of a device according to the invention will now be described with reference to Figures 3, 4 and 5. It should, however, first be said that, naturally, all symbol markings on the sheets are drawn on one and the same reduction scale.

The device shown in Figure 3 makes it possible, by rotation of the transparent sheets 15, 18, 19, around pivot 2, meaning that they are rotated relatively sheet 9 with table-top symbol 10, conveniently and quickly to demonstrate various possible alternative locations for the system units corresponding to markings 16, 12 and 20. The result of such a demonstration can then be used for a decision about a certain optimum mutual location of the various units. Such decisions can be based on different presuppositions.

One approach is to consider the work area as divided into different zones in the radial direction; for example an inner zone, an intermediate zone and an outer zone and from the outset to determine within each zone any given system unit is to be located. This implies, stated in other words, that one has already chosen a certain radial position from pivot 2 meaning that it only remains, by use of the device, to illustrate and to decide upon different angular positions.

Another approach is from the outset not to decide in which radial zone a certain unit is to be located but during that phase instead to fix its angular position which can be defined by means of sheet 17 in Figure 2e. In the use of such a method one could either for each system component have several transparent sheets the markings of which are at mutually different radial distances from the centre or, alternatively, use one sheet for each component only but provide that sheet with an elongate slot for pivot 2 like aperture 21 in Figure 4. When a certain component is, as counted in the radial direction, to be located inside another component, sheets carrying information about the vertical dimensions as shown in Figure 2c may help the user to determine whether, and if so to what extent, an unobscured view is obtainable.

Figure 4 illustrates that, thanks to the elongate form of aperture 21, it becomes possible to study various location alternatives with chair 26 at different radial distances from the table. In addition thereto Figure 4 does also clearly illustrate differences in the sitting person's reach range, depending on to which extent his arms are stretched.

The last-mentioned principle of illustration has been further elaborated in the form of the markings on sheet 22 in Figure 5 where numeral 23 designates a person sitting at the table. Dashed line 5 marks his maximum range when seated and when using both hands. Area 4 refers to what could be termed an outer one hand zone inside which there is at each side an inner one hand zone 3 within which one should place system components having a high use frequency. Within a central area 2 the two one hand zones overlap which could be looked upon as a two hand zone surrounding the central zone 1. Zones 1-5 are marked against the background of a cross-ruled pattern, where the side of each square is e.g. 10 cms. This permits simple and quick estimates of alternative locations for various components within the respective zones.

The device above described and shown on the drawing can be modified and supplemented in various ways. Its foremost advantage, the possibility of quickly to demonstrate and/or to determine space requirements and alternative locations for work implements and other system components, especially such components which are to be positioned on the table-top, does not only relate to the person working behind the table. The invention also makes it possible equally simply and quickly to illustrate at which location of e.g. a viewing screen terminal both the person normally working at the table and his visitor can simultaneously view the screen. Foot plate 1 is not a compulsory part of the device but facilitates the use thereof, especially when the transparent sheets are constituted by thin foils. When a foot plate is used some of the markings, usually those relating to the table-top, may be carried by the foot plate and not by a separate transparent sheet.

An increased surveyability and ease of observation is obtained if the markings for mutually different system components, as groups or individually, are given mutually different colours. By way of example, table-top sections may be in brown or yellow colour, electrical apparatus red, storing units green, chairs blue etc. Finally, it should be mentioned that contour lines of the work implements can be represented by other means than markings on transparent sheets. By way of example, one could use wires or tapes having the necessary rigidity. To make it possible for them, upon rotation to pass each other, they could be mounted on pivot 2 in such a way that each separately rotatable unit is, in the axial direction, positively held out of contact with adjacent units.

## Claims

1. A device for demonstrating and/or determining space requirement and alternative locations of working implements, such as apparatus and pieces of furniture, to be positioned on or at the top of a working table, especially a desk, at least one of the contour lines of the top exhibiting non-linear form, preferably the line adjacent the chair of a person working at the table, **characterized** in that it comprises a number of members (9, 15, 18, 19, 25) carrying symbols (10, 16, 12, 20, 26) each representing one of the implements and at least one (9) of them representing the table top (10), said members being relatively each other rotatable around a common pivot (2), the position of which corresponds to the position of said chair, the symbols being all in the same reduction scale and located at selected distances from the pivot (2).

2. A device as claimed in claim 1, **character ized** in that said members are constituted by transparent sheets having holes (27) for the pivot (2).

3. A device as claimed in claims 1 or 2, **charac terized** in that the member (25) having the working chair symbol (26) has an elongate hole (21) traversed by the pivot (2) and permitting variation of the radial distance between the symbol and the pivot (2).

4. A device as claimed in any of claims 1-3, **characterized** in that the pivot (2) is supported by a foot-plate (1).

5. A device as claimed in claim 4, **charac terized** in that the top surface of the foot-plate (1) has symbols representing the table-top.

# Fig. 1

## Fig. 2a

## Fig. 2b

Fig.2c

Fig.2d

Fig.2e

Fig. 3

## Fig. 4

## Fig. 5

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 4) |
|---|---|---|---|
| Y | DE-A-2 822 443 (RIEHLE) <br> * page 2, lines 1-18; page 5, line 1 - page 6, line 5; claim 1; figures 1-5 * <br> --- | 1,2 | G 09 B 29/00 |
| Y | DE-A-2 324 727 (ANSCHUTZ) <br> * page 1, line 6 - page 2, line 20; claims 1-9; figures 2, 4 * <br> --- | 1,2 | |
| Y | DE-U-7 620 810 (VOGELMANN) <br> * whole document * <br> --- | 1,2 | |
| A | US-A-4 652 239 (BRIMBERG) <br> * abstract; column 3, line 49 - column 5, line 12; figures 1-9 * <br> --- | 1 | |
| A | FR-A-1 141 123 (GOUDON) <br> * whole document * <br> ----- | 1 | TECHNICAL FIELDS SEARCHED (Int. Cl.4) <br><br> G 09 B |

The present search report has been drawn up for all claims

| Place of search | Date of completion of the search | Examiner |
|---|---|---|
| BERLIN | 25-01-1988 | BEITNER M.J.J.B. |